# EUROPEAN PATENT SPECIFICATION

(11) **EP 4 170 200 B1**
(45) Date of publication and mention of the grant of the patent: **19.03.2025**
(21) Application number: 22199366.0
(22) Date of filing: 03.10.2022
(51) Int. Cl.: F16H 13/14, F16H 15/52

(54) **CONTINUOUSLY VARIABLE TRANSMISSION**
STUFENLOS VERSTELLBARES GETRIEBE
TRANSMISSION À VARIATION CONTINUE

(30) Priority: 20.10.2021 JP 2021171663
(43) Date of publication of application: 26.04.2023
(73) Proprietor: Suzuki Motor Corporation, Hamamatsu-shi, Shizuoka 432-8611 (JP)
(72) Inventor: NAKA, Daisuke, Hamamatsu-shi, 432-8611 (JP)
(74) Representative: Haseltine Lake Kempner LLP

(56) References cited:
- EP-A1- 0 175 772
- WO-A1-81/03366
- GB-A- 1 124 670
- JP-A- 2017 198 243
- JP-Y1- S4 122 492

## Description

### [Technical Field]

The present invention relates to a continuously variable transmission.

### [Background Art]

A continuously variable transmission described in JP6071309B2 is known as a continuously variable transmission that steplessly changes power of a drive power source. The continuously variable transmission described in JP6071309B2 includes: a transmission ring centered on the central axis of an input shaft and provided so as to be movable in the central axis direction; a plurality of planetary rollers arranged at even intervals in a virtual conical surface having a vertex on the central axis, and each having a first cone portion circumscribed around an input roller and inscribed in an output ring and a second cone portion inscribed in the transmission ring; a movable holder holding the plurality of planetary rollers so that they can rotate around their rotation axis and can revolve around the central axis; and a loading cam mechanism generating a thrust load in the central axis direction. The continuously variable transmission controls the position of the transmission ring to continuously and steplessly change speed.

### [Citation List]

### [Patent Literature]

Another example of a continuously variable transmission can be found on JP2017/198243A.

### [Summary of Invention]

### [Technical Problem]

Here, it is desirable that a continuously variable transmission using planetary rollers have large transmission torque. In order to increase the transmission torque, it is necessary to increase the contact pressure in parts where the input roller and the output ring come into contact with the planetary rollers, and increase normal force in each contact part. On the other hand, when the contact pressure is increased, a large operation force is required to change the position of the parts where the input roller and the output ring come into contact with the planetary rollers, and the transmission ratio cannot be changed easily.

However, since the continuously variable transmission described in JP6071309B2 does not consider the operation force required to change the transmission ratio, there has been a problem that the transmission ratio cannot be changed easily.

In view of the foregoing, the present invention aims to provide a continuously variable transmission that can increase the transmission torque and enables easy changing of the transmission ratio.

### [Solution to Problem]

In order to solve the above problem, the present invention provides a continuously variable transmission including: an input member provided on an input shaft to which rotational power is input from a drive power source; an output member that transmits the rotational power input from the input member to an output shaft; a planetary cone having a conical surface with which the input member and the output member come into contact, the planetary cone being formed in a truncated cone shape; a support shaft that supports the planetary cone to be rotatable and movable in an axis direction; and a moving mechanism that changes a contact position of the input member on the conical surface of the planetary cone and a contact position of the output member on the conical surface of the planetary cone to steplessly change the rotational power of the input shaft into rotational power of the output shaft via the planetary cone, wherein the output shaft is disposed coaxially on one end portion side of the input shaft; the continuously variable transmission includes a shift drum disposed on the output shaft side of the input member in an axial direction of the input shaft, a carrier disposed on the input shaft side of the input member in the axial direction of the input shaft, a first supporting unit provided in the shift drum and swingably supporting an end portion of the support shaft on the output shaft side, and a second supporting unit provided in the carrier and swingably supporting an end portion of the support shaft on the input shaft side; the shift drum and the carrier are allowed to move in the axial direction of the input shaft and prevented from rotating around the input shaft; the first supporting unit includes a spherical guide roller swingably held inside a groove formed in the shift drum, and a bearing provided in the guide roller; and the second supporting unit includes a self-aligning bearing held by the carrier.

### [Advantageous Effect of Invention]

As described above, according to the present invention, it is possible to provide a continuously variable transmission that can increase the transmission torque and enables easy changing of the transmission ratio.

### [Brief Description of Drawings]

[Figure 1] Figure 1 is a cross-sectional view of a continuously variable transmission according to an example of the present invention at high speed taken along the rotation center axis of an input shaft and the axis center of a support shaft.
[Figure 2] Figure 2 is a cross-sectional view of the continuously variable transmission according to the example of the present invention taken along the rotation center axis of the input shaft and a shift drum holding member.
[Figure 3] Figure 3 is a cross-sectional view of the continuously variable transmission according to the example of the present invention at low speed taken along the rotation center axis of the input shaft and the axis center of the support shaft.
[Figure 4] Figure 4 is a perspective view illustrating displacement of a contact surface of a skewed planetary cone of the continuously variable transmission according to the example of the present invention.

### [Description of Embodiment]

A continuously variable transmission according to the present invention can increase the transmission torque and change the transmission ratio easily.

### [Example]

Hereinafter, a continuously variable transmission according to an example of the present invention will be described with reference to the drawings.

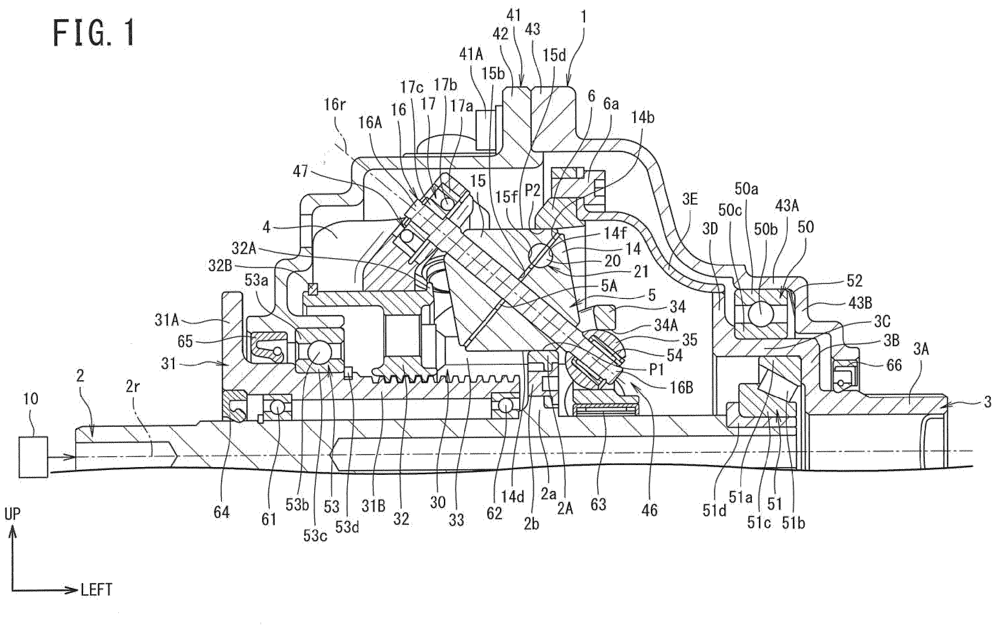

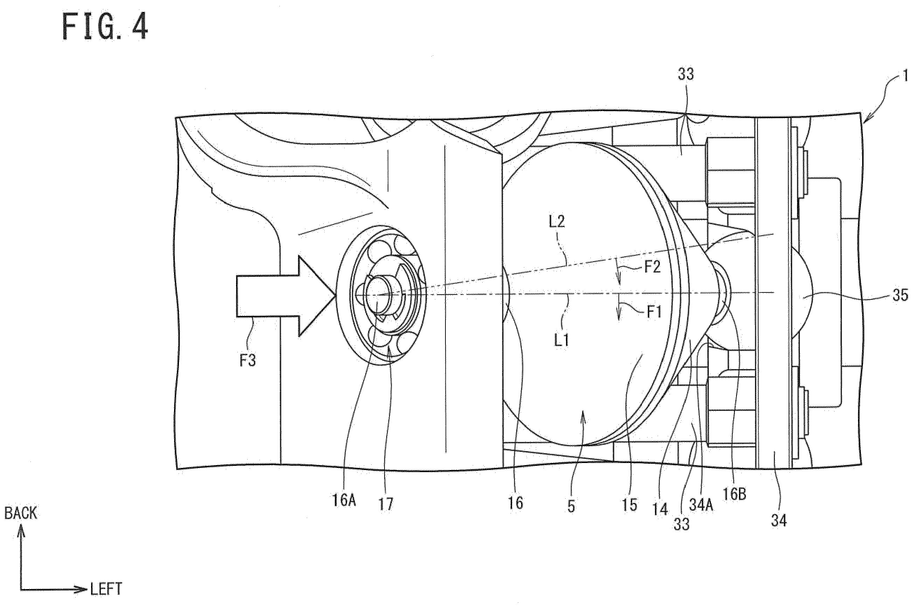

Figures 1 to 4 are diagrams illustrating the continuously variable transmission according to the example of the present invention. Note that directions (up, down, left, and right) used in the description are directions used for convenience of the description. Cross-sectional views of Figures 1 to 3 are cross-sectional views of the upper side of the continuously variable transmission according to the example of the present invention, and the up-down direction used in the description is based on these drawings. That is, the arrangement is reversed for the lower side not illustrated in the drawings. In other words, using the rotation center axis of the input shaft as a reference, a direction radially separating from the rotation center axis of the input shaft is described as the upper side, and a direction approaching the rotation center axis of the input shaft is described as the lower side. The left-right direction is also based on these drawings. That is, a side on which an input shaft 2 connected with a drive power source is disposed is defined as the right side, and this direction is also referred to as an input side or an input shaft side. Conversely, a side on which an output shaft 3 connected with a driving wheel is disposed is defined as the left side, and this direction is also referred to as an output side or an output shaft side. Figure 4 is a diagram for describing a planetary cone 5 as viewed from above, and the front-rear direction in this diagram is based on the coordinates specified in the drawing.

First, the configuration will be described. In Figure 1, a continuously variable transmission 1 is mounted on a vehicle, and steplessly varies rotational power of a drive power source 10 such as an internal combustion engine and a motor and transmits the rotational power to a driving wheel (not illustrated).

The continuously variable transmission 1 includes a transmission case 41, an input shaft 2 into which rotational power is input from the drive power source 10, a sun roller 2A as an input member attached to the input shaft 2, a ring roller 6 as an output member for transmitting the rotational power input from the sun roller 2A to an output shaft 3, and the output shaft 3.

Additionally, the continuously variable transmission 1 includes a carrier 4, a plurality of planetary cones 5 having conical surfaces 14d and 15d with which the sun roller 2A and the ring roller 6 come into contact and formed in a truncated cone shape, and a support shaft 16 supporting the planetary cones 5 so that they are rotatable and also movable in the axis direction.

Additionally, the continuously variable transmission 1 includes a moving mechanism 30. The moving mechanism 30 moves the planetary cone 5 along the axial direction of the input shaft 2, and changes a contact position P1 of the sun roller 2A on the conical surface 14d of the planetary cone 5 and changes a contact position P2 of the ring roller 6 on the conical surface 15d of the planetary cone 5. According to these changes, the continuously variable transmission 1 steplessly varies and outputs the rotational power of the input shaft 2 to the output shaft 3 via the planetary cones 5.

The transmission case 41 is formed of a right case 42 and a left case 43 connected to a left end portion of the right case 42 with a bolt 41A. Members described later that form the continuously variable transmission 1 and a traction oil are accommodated in the transmission case 41.

The input shaft 2 extends in the left-right direction, and the drive power source 10 is connected to the right end of the input shaft 2. An annular enlarged-diameter portion 2a protruding in the radial direction is formed in a central portion in the longitudinal direction of the input shaft 2. The sun roller 2A is attached to the outer periphery of the enlarged-diameter portion 2a with a bolt 2b.
The sun roller 2A has a ring shape centered on the same axis as the input shaft 2, and is formed with a large diameter so as to protrude from the input shaft 2.

Note that an axis 2r along the input shaft 2 extending in the left-right direction is the rotation center axis of the input shaft 2, and the input shaft 2 rotates around the axis 2r. The direction of the axis 2r is referred to as an axis direction.

The output shaft 3 and the axis 2r of the input shaft share a common axis. To be specific, the output shaft 3 is coaxially disposed on the left end side of the input shaft 2. The output shaft 3 includes a tubular shaft portion 3A protruding from the left case 43, a disk-shaped enlarged-diameter portion 3B spreading radially outward from the right end of the shaft portion 3A, a large-diameter portion 3C having a large diameter, tubular and extending rightward from the outer peripheral end of the enlarged-diameter portion 3B, into which a left end portion of the input shaft 2 is inserted, and a disk-shaped enlarged-diameter portion 3D spreading radially outward from the right end of the large-diameter portion 3C. The shaft portion 3A, the enlarged-diameter portions 3B and 3D, and the large-diameter portion 3C are formed of one member.

The output shaft 3 further includes a tubular output drum 3E. The output drum 3E is disposed around the same axis as the input shaft 2, extends rightward from the radially outer peripheral edge of the enlarged-diameter portion 3D, and has a diameter that spreads so as to separate from the input shaft 2 in the radial direction toward the right. The ringshaped ring roller 6 is attached to the large-diameter end portion which is the right end of the output drum 3E with a bolt 6a.

The output drum 3E is formed of a member separate from the shaft portion 3A, the enlarged-diameter portions 3B and 3D, and the large-diameter portion 3C. A small-diameter end portion which is the left end of the output drum 3E is connected and integrated with the enlarged-diameter portion 3D. That is, the output shaft 3 has a joining structure in which, of the component members, the output drum 3E is formed separately from the other members. As a result, it is possible to improve workability of manufacturing of the output shaft 3 and increase productivity of the output shaft 3.

A final drive gear (not illustrated) is attached to the shaft portion 3A of the output shaft 3, and the final drive gear meshes with a final driven gear of a differential device (not illustrated). The differential device is connected to left and right driving wheels via left and right drive shafts (not illustrated). The differential device distributes rotational power of the drive power source 10 transmitted from the output shaft 3 to the left and right drive shafts, and transmits the rotational power to the left and right driving wheels.

The carrier 4 is disposed around the input shaft 2. The carrier 4 holds an end portion 16A (right end portion) on the input shaft 2 side of the support shaft 16 that axially supports the plurality of planetary cones 5 in a rotatable manner. That is, the input shaft 2 is disposed so as to penetrate the carrier 4, and the plurality of planetary cones 5 are disposed so as to surround the input shaft 2.

The carrier 4 holds the support shaft 16 via a self-aligning bearing 17. The self-aligning bearing 17 includes an outer ring 17a, balls 17b, and an inner ring 17c rotatably connected to the outer ring 17a via the balls 17b. The self-aligning bearing 17 is formed of a self-aligning ball bearing using the balls 17b. The self-aligning bearing 17 swingably supports the end portion 16A (right end portion) on the input shaft 2 side of the support shaft 16 attached to the inner ring 17c of the self-aligning bearing 17. The self-aligning bearing 17 supports the support shaft 16 so that it is not displaced in the direction of an axis center 16r of the support shaft 16. The self-aligning bearing 17 forms a second supporting unit 47.

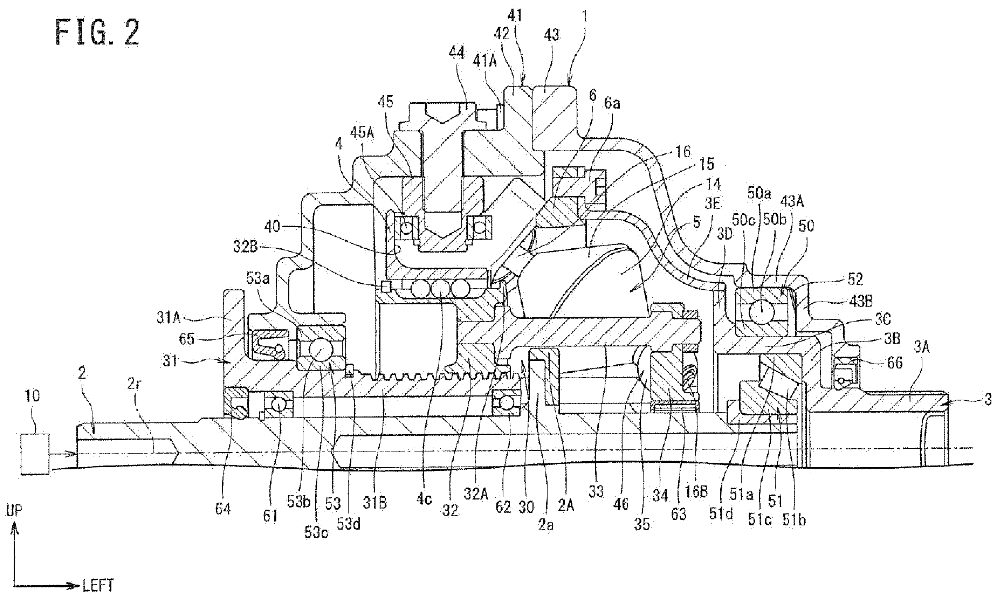

In Figure 2, a shift flange 32 described later is in contact with an inner peripheral surface of the carrier 4 via a ball spline 4c. The ball spline 4c restricts relative rotation of the carrier 4 and the shift flange 32 around the input shaft 2, and allows relative movement of the input shaft 2 in the axial direction. The shift flange 32 is disposed so as to penetrate the carrier 4, and the input shaft 2 is disposed so as to penetrate the shift flange 32. That is, the shift flange 32 is disposed so as to surround the input shaft 2 on the inner diameter side of the carrier 4.

The carrier 4 is disposed on the input shaft 2 side (right side) of the sun roller 2A in the axial direction of the input shaft 2. A guide groove 40 extending in the axial direction of the input shaft 2 and open to the outer diameter side (outside) is formed on the outer periphery of the carrier 4. Then, a guide follower 45 fixed to the transmission case 41 is disposed in the internal space of the guide groove 40, and the guide follower 45 abuts on the guide groove 40. The guide follower 45 is fixed to the transmission case 41 with a bolt 44 inserted from outside along a direction substantially perpendicular to the input shaft 2. The guide follower 45 and the guide groove 40 restrict the carrier 4 from rotating relative to the transmission case 41, and allow and guide the carrier 4 to move in the axial direction of the input shaft 2. The guide follower 45 is formed similarly to a ball bearing, and includes a contact portion 45A that corresponds to the outer ring of a ball bearing and abuts on the guide groove 40. Then, when the contact portion 45A rotates, the frictional resistance at the contact part between the guide follower 45 and the guide groove 40 decreases, so that the carrier 4 can easily move in the extending direction of the guide groove 40.

Thus, since rotation of the carrier 4 around the input shaft 2 is restricted by the guide follower 45 abutting on the inside of the guide groove 40, the shift flange 32 connected to the carrier 4 via the ball spline 4c is also restricted from rotating relative to the transmission case 41. Additionally, the carrier 4 is allowed and guided to move in the axial direction of the input shaft 2 by the guide groove 40 and the ball spline 4c. Note that the guide follower 45 disposed in the internal space of the guide groove 40 is fixed to the transmission case 41 by screwing a male thread formed in the bolt 44 into a female thread formed in the guide follower 45. That is, the bolt 44 and the guide follower 45 sandwich the transmission case 41 by being screwed onto each other, and are thereby fixed to the transmission case 41. Additionally, the diameter of the hole in the transmission case 41 into which the bolt 44 is inserted is formed larger than the diameter of the bolt 44, and a gap is provided between the transmission case 41 and the bolt 44. Hence, the positions of the bolt 44 and the guide follower 45 with respect to the transmission case 41 can be finely adjusted within the range of the gap. That is, the position of the guide follower 45 can be finely adjusted according to the position of the guide groove 40 in the carrier 4.

Note that a restriction portion 32A protruding radially outward is formed in a left end portion of an outer peripheral surface of the shift flange 32. Additionally, a circlip 32B protruding radially outward is mounted on a right end portion of an outer peripheral surface of the shift flange 32. When the amount of relative movement of the carrier 4 with respect to the shift flange 32 in the axial direction of the input shaft 2 increases, the restriction portion 32A and the circlip 32B come into contact with the carrier 4, and further relative movement of the carrier 4 is restricted. That is, in the shift flange 32, the restriction portion 32A and the circlip 32B that limit the movement range of the carrier 4 are disposed on both sides in the axial direction of the ball spline 4c.

In Figure 1, the planetary cone 5 is supported by the carrier 4 and a shift drum 34 via the support shaft 16. The carrier 4 is disposed on the input shaft 2 side of the sun roller 2A in the axial direction of the input shaft 2. The shift drum 34 is disposed on the output shaft 3 side of the sun roller 2Ain the axial direction of the input shaft 2. A needle bearing 63 is held on the inner peripheral side of the shift drum 34, and the needle bearing 63 rotatably supports the input shaft 2. That is, the input shaft 2 penetrates the shift drum 34, and the shift drum 34 is supported by the input shaft 2 in a relatively rotatable manner via the needle bearing 63.

The planetary cone 5 includes a truncated cone-shaped input-side planetary cone 14 with which the sun roller 2A comes into contact, and a truncated cone-shaped output-side planetary cone 15 provided separately from the input-side planetary cone 14 and with which the ring roller 6 comes into contact. The input-side planetary cone 14 and the output-side planetary cone 15 are supported by the support shaft 16 so as to be rotatable relative to the support shaft 16 in postures where both bottom surfaces 14b and 15b face each other. That is, the input-side planetary cone 14 and the output-side planetary cone 15 are rotatably attached to the support shaft 16 in a reversed manner such that the bottom surfaces 14b and 15b face each other. The input-side planetary cone 14 and the output-side planetary cone 15 are supported by the support shaft 16 so as to be movable in the direction of the axis center 16r within the range of the self-aligning bearing 17 in an end portion of the support shaft 16 and a guide roller 35. Note that in an assembled state, the input-side planetary cone 14 abuts on the sun roller 2A to restrict the position of the input-side planetary cone 14 on the output shaft 3 side (left end side) of the support shaft 16, and the output-side planetary cone 15 abuts on the ring roller 6 to restrict the position of the output-side planetary cone 15 on the input shaft 2 side (right end side) of the support shaft 16.

The planetary cone 5 includes a ball cam mechanism 21 between the input-side planetary cone 14 and the output-side planetary cone 15. The ball cam mechanism 21 connects the bottom surface 14b of the input-side planetary cone 14 and the bottom surface 15b of the output-side planetary cone 15, and transmits power from the input-side planetary cone 14 to the output-side planetary cone 15 or from the output-side planetary cone 15 to the input-side planetary cone 14.

The ball cam mechanism 21 includes a plurality of input-side cam grooves 14f formed on the bottom surface 14b of the input-side planetary cone 14, a plurality of output-side cam grooves 15f formed on the bottom surface 15b of the output-side planetary cone 15, and a ball 20 accommodated so as to straddle the input-side cam grooves 14f and the output-side cam grooves 15f. The same number of input-side cam grooves 14f and output-side cam grooves 15f are formed, and the input-side cam grooves 14f and the output-side cam grooves 15f extend along the circumferential direction around the axis center 16r of the support shaft 16.

The shape of the cross section of the input-side cam groove 14f and the output-side cam groove 15f along the radial direction around the axis center 16r of the support shaft 16 is an arc shape having the same radius dimension as the radius dimension of the ball 20. For this reason, the ball 20 disposed in a space sandwiched between the input-side cam groove 14f and the output-side cam groove 15f does not move in the radial direction around the axis center 16r of the support shaft 16. Then, the input-side cam groove 14f and the output-side cam groove 15f are formed such that their depths change in the circumferential direction. Specifically, the input-side cam groove 14f and the output-side cam groove 15f are formed in a shape that is deep at the center in the circumferential direction and gradually becomes shallow toward both ends in the circumferential direction from the center in the circumferential direction. That is, the input-side cam groove 14f and the output-side cam groove 15f are formed shallower toward the end portion in the circumferential direction. Then, the ball 20 is allowed to roll in the circumferential direction along the input-side cam groove 14f and the output-side cam groove 15f, and the input-side cam groove 14f and the output-side cam groove 15f are set so that their groove width dimension in the radial direction around the axis center 16r of the support shaft 16 is about the same as the dimension (dimension of cross section when cut along bottom surfaces 14b and 15b of planetary cone 5) of the ball 20 abutting on the groove bottom in the position where the ball 20 rolls. For this reason, the groove width of the input-side cam groove 14f and the output-side cam groove 15f is formed so as to be wide at the center in the circumferential direction and gradually narrow toward both ends in the circumferential direction from the center in the circumferential direction.

The input-side cam groove 14f and the output-side cam groove 15f are formed in positions where they face each other when the bottom surface 14b and the bottom surface 15b are brought into contact with each other, and have the same shape. Additionally, the input-side planetary cone 14 and the output-side planetary cone 15 are formed in the same shape. That is, the input-side planetary cone 14 and the output-side planetary cone 15 have the same shape and are interchangeable, whereby productivity is increased.

In other words, the same planetary cone 5 can be formed by replacing the output-side planetary cone 15 with the input-side planetary cone 14, or replacing the input-side planetary cone 14 with the output-side planetary cone 15.

The input-side planetary cone 14 transmits power to the output-side planetary cone 15 via the ball 20. While the ball 20 is formed of a steel ball, for example, the ball 20 is not limited to a steel ball.

In the present example, a dimensional tolerance is set so as to provide a gap at the contact position P1 between the conical surface 14d of the input-side planetary cone 14 of the planetary cone 5 and the sun roller 2A, and a dimensional tolerance is set so as to provide a gap at the contact position P2 between the conical surface 15d of the output-side planetary cone 15 of the planetary cone 5 and the ring roller 6. That is, the dimension of the components are set so that there is no press-fitting at the contact positions P1 and P2. As a result, assembly of the planetary cone 5 onto the continuously variable transmission 1 can be facilitated.

In the planetary cone 5, when power is input to the input-side planetary cone 14 from the sun roller 2A, the torque difference causes the input-side planetary cone 14 and the output-side planetary cone 15 to rotate relative to each other such that their positions in the rotating direction are shifted temporarily. That is, when power is input to the input-side planetary cone 14 from the sun roller 2A, the contact between the output-side planetary cone 15 and the ring roller 6 or the inertia due to self-weight of the output-side planetary cone 15 causes the rotation of the output-side planetary cone 15 to temporarily lag behind the rotation of the input-side planetary cone 14. This causes a shift in the relative positions of the input-side planetary cone 14 and the output-side planetary cone 15 in the rotating direction, and causes the ball 20 to move (roll) inside the input-side cam groove 14f and the output-side cam groove 15f. When the ball 20 moves (rolls) inside the input-side cam groove 14f and the output-side cam groove 15f, the ball cam mechanism 21 operates. In this case, the ball 20 causes the input-side planetary cone 14 and the output-side planetary cone 15 to separate in the axis direction of the support shaft 16.

That is, when the ball 20 moves, positions of the input-side cam groove 14f and the output-side cam groove 15f on which the ball 20 abuts change, and the ball 20 is displaced to a location with a different depth. Hence, the amount of protrusion of the ball 20 from the input-side cam groove 14f and the output-side cam groove 15f changes, and the input-side planetary cone 14 and the output-side planetary cone 15 move toward and away from each other in the axis direction of the support shaft 16.

That is, when the depth of the input-side cam groove 14f and the output-side cam groove 15f where the ball 20 is located grows shallower, the input-side planetary cone 14 and the output-side planetary cone 15 move away from each other in the axis direction of the support shaft 16. When the relative movement of the input-side planetary cone 14 and the output-side planetary cone 15 in the rotating direction settles, the input-side planetary cone 14 and the output-side planetary cone 15 rotate integrally via the ball 20. This is a situation of an increase in the transmitted torque, where the input-side planetary cone 14 and the output-side planetary cone 15 move away from each other in the axis direction of the support shaft 16, the contact between the input-side planetary cone 14 and the sun roller 2A and the contact between the output-side planetary cone 15 and the ring roller 6 are strengthened, and transmission of large torque can be achieved.

On the other hand, when the depth of the input-side cam groove 14f and the output-side cam groove 15f where the ball 20 is located grows deeper, the input-side planetary cone 14 and the output-side planetary cone 15 move toward each other in the axis direction of the support shaft 16. When the relative movement of the input-side planetary cone 14 and the output-side planetary cone 15 in the rotating direction settles, the input-side planetary cone 14 and the output-side planetary cone 15 rotate integrally via the ball 20. This is a situation of a decrease in the transmitted torque, where the input-side planetary cone 14 and the output-side planetary cone 15 move toward each other in the axis direction of the support shaft 16, the force of pressing the input-side planetary cone 14 against the sun roller 2A and the force of pressing the output-side planetary cone 15 against the ring roller 6 are weakened, and pressing force unnecessary for torque transmission can be cancelled to improve durability.

Except for the relative movement (shift) due to the torque difference, the input-side planetary cone 14 and the output-side planetary cone 15 are connected via the ball cam mechanism 21 and rotate integrally around the axis center 16r of the support shaft 16.

Note that even in a state where the input-side planetary cone 14 and the output-side planetary cone 15 are separated farthest in the axis direction of the support shaft 16, the ball 20 does not come out of the input-side cam groove 14f and the output-side cam groove 15f. In other words, the input-side planetary cone 14 and the output-side planetary cone 15 move in the axis direction of the support shaft 16 within the range of a distance smaller than the diameter of the ball 20.

Additionally, both ends in the circumferential direction of the input-side cam groove 14f and the output-side cam groove 15f have a function as a stopper that abuts on the ball 20 and restricts further shifting (relative rotation angle) of the input-side planetary cone 14 and the output-side planetary cone 15.

The planetary cone 5 includes an elastic member 5A provided in a compressed state between the bottom surface 14b of the input-side planetary cone 14 and the bottom surface 15b of the output-side planetary cone 15. The elastic member 5A is formed of a Belleville spring or a waved washer, and generates a restoring force at the time of compression. Even in a state where the planetary cone 5 does not transmit torque, the biasing force (restoring force) of the elastic member 5A presses the input-side planetary cone 14 against the sun roller 2A and presses the output-side planetary cone 15 against the ring roller 6. As a result, it is possible to prevent the input-side planetary cone 14 from running idly with respect to the sun roller 2A and prevent the output-side planetary cone 15 from running idly with respect to the ring roller 6, so that the planetary cone 5 can transmit torque without slipping. That is, when power is input to the input-side planetary cone 14 from the sun roller 2A, regardless of the magnitude of the inertia due to self-weight of the output-side planetary cone 15, the force of the ring roller 6 abutting on the output-side planetary cone 15 can generate relative rotation between the input-side planetary cone 14 and the output-side planetary cone 15 immediately and cause the ball cam mechanism 21 to operate. Note that the elastic member 5A is attached to the input-side planetary cone 14 or the output-side planetary cone 15 with its shape and installation position determined so as to avoid interference with the input-side cam groove 14f and the output-side cam groove 15f and also the ball 20 to avoid affecting the operation of the ball cam mechanism 21.

An end portion 16B (left end portion) on the output shaft 3 side of the support shaft 16 is swingably supported by a first supporting unit 46. The first supporting unit 46 is configured of the spherical guide roller 35 swingably held inside a groove 34A formed in the shift drum 34, and a bearing 54 provided in the guide roller 35. The bearing 54 is formed of a needle bearing, and supports the end portion 16B of the support shaft 16 with respect to the guide roller 35. The groove 34A formed in the shift drum 34 is a helical groove formed so as to be moderately wound around the input shaft 2. The groove 34A is formed so as to be displaced in the circumferential direction along with displacement of the input shaft 2 in the axial direction. Then, the groove 34A not only swingably holds the guide roller 35, but also causes the guide roller 35 to move slightly in the circumferential direction of the input shaft 2 when the shift drum 34 is displaced in the axial direction of the input shaft 2.

The support shaft 16 is installed in a posture tilted with respect to the axis 2r of the input shaft 2 such that the axis center 16r is tilted with respect to the axis 2r of the input shaft 2. Specifically, the axis center 16r of the support shaft 16 is installed to be tilted with respect to the axis 2r of the input shaft 2 such that the central axis of the axis center 16r of the support shaft 16 comes closer to the input shaft 2 toward the left side.

When the shift drum 34 is moved in the direction of the axis 2r of the input shaft 2 by the moving mechanism 30, the planetary cone 5 moves in the direction of the axis 2r of the input shaft 2 together with the shift drum 34, a shift drum holding member 33, the shift flange 32, and the carrier 4.

A plurality of the planetary cones 5 are provided at even intervals in the circumferential direction so as to surround the input shaft 2 radially outward of the input shaft 2. As a result, it is possible to cancel out normal forces acting on the sun roller 2A and the ring roller 6 from the planetary cones 5. Additionally, in the continuously variable transmission 1 according to the embodiment of the present invention, an odd number of the planetary cones 5 are provided. As a result, since there is only one support shaft 16 on a plane including the axis 2r of the input shaft 2, freedom in installing the planetary cones 5 increases.

The sun roller 2A is in contact with the conical surface 14d of the input-side planetary cone 14, and the ring roller 6 is in contact with the conical surface 15d of the output-side planetary cone 15.

The input-side planetary cone 14 is installed in a posture where the bus of its conical surface 14d extends parallel to the axis 2r of the input shaft 2 to form a conical surface always in contact with the sun roller 2A.

The output-side planetary cone 15 is installed in a posture where the bus of its conical surface 15d extends parallel to the axis 2r of the input shaft 2 to form a conical surface always in contact with the ring roller 6.

That is, even when the planetary cone 5 moves in the direction of the axis 2r of the input shaft 2, since the planetary cone 5 moves in the direction of the axis 2r of the input shaft 2 while keeping the posture where the conical surface always in contact with the sun roller 2A and the conical surface always in contact with the ring roller 6 are parallel to the axis 2r of the input shaft 2, the contact between the conical surface 14d and the sun roller 2A and the contact between the conical surface 15d and the ring roller 6 are maintained.

As illustrated in Figure 2, the moving mechanism 30 includes a transmission operation unit 31 connected to the shift drum 34. The transmission operation unit 31 is operated from the outside by an actuator or the like to move the shift drum 34 in the axial direction of the input shaft 2.

The moving mechanism 30 further includes the shift flange 32 and the shift drum holding member 33. The shift flange 32 is provided on the outer periphery side of the transmission operation unit 31 and inner periphery side of the carrier 4, and moves in the axial direction of the input shaft 2 when the transmission operation unit 31 is operated. The shift drum holding member 33 connects the shift flange 32 and the shift drum 34 so that they are integrally movable in the axial direction of the input shaft 2. The shift drum holding member 33 is a columnar member disposed between the planetary cones 5 so as to extend in the axial direction of the input shaft 2, and a plurality of the shift drum holding members 33 are provided. Here, the carrier 4 is allowed to move in the axial direction of the input shaft 2 and prevented from rotating around the input shaft 2 by the guide follower 45 and the guide groove 40. Additionally, the shift flange 32 is allowed to move in the axial direction of the input shaft 2 and prevented from rotating around the input shaft 2 by the carrier 4 via the ball spline 4c. For this reason, the shift drum 34 connected to the shift flange 32 by the shift drum holding member 33 is also allowed to move in the axial direction of the input shaft 2 and prevented from rotating around the input shaft 2.

The transmission operation unit 31 includes an operation portion 31A which is a radially spreading disk portion, and a shaft portion 31B with a feed screw formed on its outer peripheral surface. Additionally, the shift flange 32 is formed in a ring shape so as to surround the outer peripheral portion of the shaft portion 31B of the transmission operation unit 31. A feed screw that is screwed onto the shaft portion 31B is formed on an inner peripheral surface of the shift flange 32. The shift drum holding member 33 is connected to the left end portion of the shift flange 32. The shift drum holding member 33 is formed in a bar shape that passes above the sun roller 2A and extends leftward from the shift flange 32. A left end portion of the shift drum holding member 33 is connected to the shift drum 34.

In the moving mechanism 30, when the transmission operation unit 31 is rotated from the outside, the shift flange 32 is moved in the axial direction of the input shaft 2 by a feed screw mechanism. Then, the shift drum 34 connected to the shift flange 32 via the shift drum holding member 33 moves in the axial direction of the input shaft 2 integrally with the shift flange 32. When the shift drum 34 moves, the position of the groove 34A of the shift drum 34 with respect to the guide roller 35 changes. As described earlier, the groove 34A is a helical groove formed around the input shaft 2, and moves the position of the guide roller 35 slightly in the circumferential direction of the input shaft 2 along with displacement of the shift drum 34 in the axial direction. Then, the support shaft 16 tilts in the screw direction with respect to the input shaft 2, whereby the posture of the planetary cone 5 changes to a skewed state. The skewed planetary cone 5 receives a force in the direction of cancelling the tilt of the support shaft 16, the guide roller 35 moves through the groove 34A of the shift drum 34 to cancel the tilt, and the movement ends when the tilt is cancelled. The position of the guide roller 35 where the tilt is cancelled is the position inside the groove 34A where the guide roller 35 was located before movement of the shift drum 34. This movement occurs automatically immediately after movement of the shift drum 34. For this reason, it appears as if the guide roller 35 held by the shift drum 34 moves together with the shift drum 34 and the planetary cone 5 moves in the same direction. At this time, the carrier 4 is moved in the same direction accompanying the movement of the planetary cone 5 by the ball spline 4c separately from the shift flange 32. In the present example, the carrier 4 is moved to a position where the skew is cancelled, by a component of force generated by the skew of the planetary cone 5 caused by the movement of the shift flange 32.

Note that while the shift flange 32 is moved in the axial direction by the feed screw mechanism in the present example, the shift flange 32 may be moved in the axial direction directly by an actuator without using a feed screw mechanism. Similarly, when the shift drum 34 moves in the other axial direction, the planetary cone 5 moves and the carrier 4 moves in the moving direction of the shift drum 34 accompanying the planetary cone 5. With these operations, the posture and arrangement of the planetary cone 5 are maintained appropriately, and the positions of the shift drum 34 and the carrier 4 are adjusted accordingly. Hence, the need for portions for defining the positional relationship between the first supporting unit 46 and the second supporting unit 47 can be eliminated, dimensions can be managed easily at the time of manufacturing of portions, and productivity can be increased.

The operation portion 31A of the transmission operation unit 31 is disposed outside the transmission case 41. The shaft portion 31B of the transmission operation unit 31 is disposed inside the transmission case 41 and surrounds an outer peripheral surface of the input shaft 2.

A seal member 64 is provided between an inner peripheral surface of the operation portion 31A and the outer peripheral surface of the input shaft 2. A seal member 65 is provided between an outer peripheral surface of a right end portion of the shaft portion 31B of the transmission operation unit 31 and an inner peripheral surface of a right end portion of the transmission case 41. Moreover, a seal member 66 is provided between an outer peripheral surface of the shaft portion 3A of the output shaft 3 and an inner peripheral surface of a left end portion of the transmission case 41. These seal members 64, 65, and 66 prevent leakage of traction oil from the inside to the outside of the transmission case 41, and prevent entry of foreign matter from the outside to the inside of the transmission case 41.

A ball bearing 61 is provided between an inner peripheral surface of a right end portion of the shaft portion 31B of the transmission operation unit 31 and an outer peripheral surface of the input shaft 2. A ball bearing 62 is provided between an inner peripheral surface of a left end portion of the shaft portion 31B of the transmission operation unit 31 and the outer peripheral surface of the input shaft 2.

A ball bearing 53 is provided near the right end portion of the shaft portion 31B of the transmission operation unit 31 and on the left side of the seal member 65. The ball bearing 53 includes a spherical rolling body 53b, and an outer ring 53a and inner ring 53c relatively rotatable via the rolling body 53b. The inner ring 53c of the ball bearing 53 is fitted into the shaft portion 31B, and is prevented from dropping off in the axial direction by a circlip 53d mounted on the shaft portion 31B. The outer ring 53a of the ball bearing 53 is fitted into the inner peripheral surface of the right end portion of the transmission case 41.

As described above, in the present example, the transmission operation unit 31 is rotatably supported with respect to the transmission case 41 by the ball bearing 53. Additionally, the right end side portion of the input shaft 2 is rotatably supported with respect to the transmission operation unit 31 by the ball bearings 61 and 62.

In the continuously variable transmission 1 of the present example, the contact position P1 between the conical surface 14d of the planetary cone 5 and the sun roller 2A and the contact position P2 between the conical surface 15d of the planetary cone 5 and the ring roller 6 are in the same position in the axial direction of the input shaft 2. In other words, the sun roller 2A and the ring roller 6 are positioned on the same cross section perpendicular to the axis of the input shaft 2, and face each other in the radial direction of the input shaft 2. For this reason, except for the skewed state described earlier, no turning moment that tilts the axis center 16r of the planetary cone 5 is generated by the contact pressure of the sun roller 2A and the ring roller 6.

In the continuously variable transmission 1 of the present example, the contact position P1 of the sun roller 2A with the conical surface 14d of the planetary cone 5 and the contact position P2 of the ring roller 6 with the conical surface 15d of the planetary cone 5 both extend substantially parallel to the input shaft 2. That is, the contact surfaces of the sun roller 2A and the ring roller 6 with the planetary cone 5 have a cylindrical shape extending substantially parallel to the input shaft 2.

The continuously variable transmission 1 of the present example includes a ball bearing 50. The ball bearing 50 includes an outer ring 50a fitted into the transmission case 41, and an inner ring 50c connected to the outer ring 50a via a spherical rolling body 50b and fitted into the outer peripheral surface of the output shaft 3. The outer ring 50a is fitted into an inner peripheral surface of a tubular bearing holding portion 43A formed near a left end portion of the transmission case 41. Additionally, the inner ring 50c is fitted into an outer peripheral surface of the tubular large-diameter portion 3C formed in the output shaft 3.

Additionally, the continuously variable transmission 1 includes a tapered roller bearing 51. The tapered roller bearing 51 includes an outer ring 51a fitted into an inner peripheral surface of the output shaft 3, and an inner ring 51c connected to the outer ring 51a via a roller (roller having conical surface) shaped rolling body 51b and fitted into the outer peripheral surface of the input shaft 2. The outer ring 51a is fitted into an inner peripheral surface of the large-diameter portion 3C of the output shaft 3. The inner ring 51c is fitted into an outer peripheral surface of a tubular bearing holding member 51d mounted on a left end portion of the input shaft 2. The bearing holding member 51d restricts rightward movement of the inner ring 51c. A right end portion of the inner ring 51c abuts on a left end portion of an enlarged-diameter portion of the bearing holding member 51d. The rolling body 51b is tilted so as to receive an axial load in a direction bringing the input shaft 2 and the output shaft 3 closer to each other. Thus, the tapered roller bearing 51 receives load in the axial direction and the radial direction acting between the input shaft 2 and the output shaft 3. Accordingly, the tapered roller bearing 51 also receives load in the axial direction and the radial direction acting between the sun roller 2A and the ring roller 6. In particular, the tapered roller bearing 51 can effectively receive load generated in the axial direction of the input shaft 2 in the skewed state described earlier, and load generated in the axial direction of the input shaft 2 during activation of the ball cam mechanism 21.

Furthermore, the continuously variable transmission 1 includes a preload applying member 52. The preload applying member 52 is provided in a compressed state between the ball bearing 50 and the transmission case 41. The preload applying member 52 is formed of a diaphragm spring or a waved washer, for example, and biases the ball bearing 50 in the axial direction of the input shaft 2 so as to apply a preload on the tapered roller bearing 51. Additionally, the preload applying member 52 curbs looseness of the continuously variable transmission 1 in the axial direction of the input shaft 2 to increase productivity.

To be specific, the preload applying member 52 is provided between a left end portion of the outer ring 50a of the ball bearing 50 and a disk-shaped preload applying member holding portion 43B continuous with a right end portion of the bearing holding portion 43A of the transmission case 41. The restoring force of the preload applying member 52 presses the output shaft 3 rightward via the ball bearing 50. As a result, a leftward force acts on the outer ring 51a of the tapered roller bearing 51, and the force acts as a preload on the tapered roller bearing 51. Additionally, since the preload applying member 52 biases the transmission case 41 leftward, it is possible to curb displacement of the transmission case 41 in the axial direction due to the leftward load, and curb occurrence of noise and vibration due to the displacement of the transmission case 41.

Note that in a case where the preload applying member 52 is formed of a diaphragm spring, by designing the preload applying member 52 so that the preload on the tapered roller bearing 51 has an angular load characteristic, a stable preload can be applied on the tapered roller bearing 51 even when there is variation in positional tolerance in the axial direction of the ball bearing 50.

Next, the operation of the continuously variable transmission 1 will be described. The rotational power of the drive power source 10 is transmitted to the input shaft 2 of the continuously variable transmission 1, and is transmitted to the input-side planetary cone 14 from the sun roller 2A integrated with the input shaft 2. Since the ball cam mechanism 21 is provided between the input-side planetary cone 14 and the output-side planetary cone 15, the rotational power of the drive power source 10 is transmitted from the input-side planetary cone 14 to the output-side planetary cone 15 via the ball 20, and then the rotational power is transmitted from the output-side planetary cone 15 to the ring roller 6. That is, rotation of the sun roller 2A rotates the planetary cone 5 together with the support shaft 16, and the rotational power of the planetary cone 5 is transmitted to the ring roller 6.

When the rotational power is transmitted from the output-side planetary cone 15 to the ring roller 6, the rotational power is transmitted from the output shaft 3 to the final driven gear of the differential device via the final drive gear, and then the rotational power is transmitted from the differential device to the left and right driving wheels via left and right drive shafts.

In the continuously variable transmission 1, the rotational power (drive power) is transmitted and transmission (conversion of rotation speed) is simultaneously performed in the following manner. The rotation speed of the sun roller 2A is transmitted to the input-side planetary cone 14, and the planetary cone 5 rotates at a changed rotation speed at the ratio of the radius dimension of the sun roller 2A to the radius dimension of the contact part in the input-side planetary cone 14. The rotation speed of the planetary cone 5 is transmitted to the ring roller 6. At this time, the ring roller 6 rotates at a changed rotation speed at the ratio of the radius dimension of the ring roller 6 to the radius dimension of the contact part in the planetary cone 5.

For example, in a case where the planetary cone 5 is moved to a position (far right position in movable range of planetary cone 5) farthest away from the shaft portion 3A of the output shaft 3 by the moving mechanism 30, as illustrated in Figure 1, the sun roller 2A comes into contact with the conical surface 14d of the input-side planetary cone 14 with the smallest diameter. At this time, the ring roller 6 comes into contact with the conical surface 15d of the output-side planetary cone 15 on the bottom surface 15b side with the largest diameter. As a result, the rotation speed of the sun roller 2A is transmitted to the ring roller 6 by being increased by the planetary cone 5. This is a state of the continuously variable transmission 1 with the smallest transmission ratio.

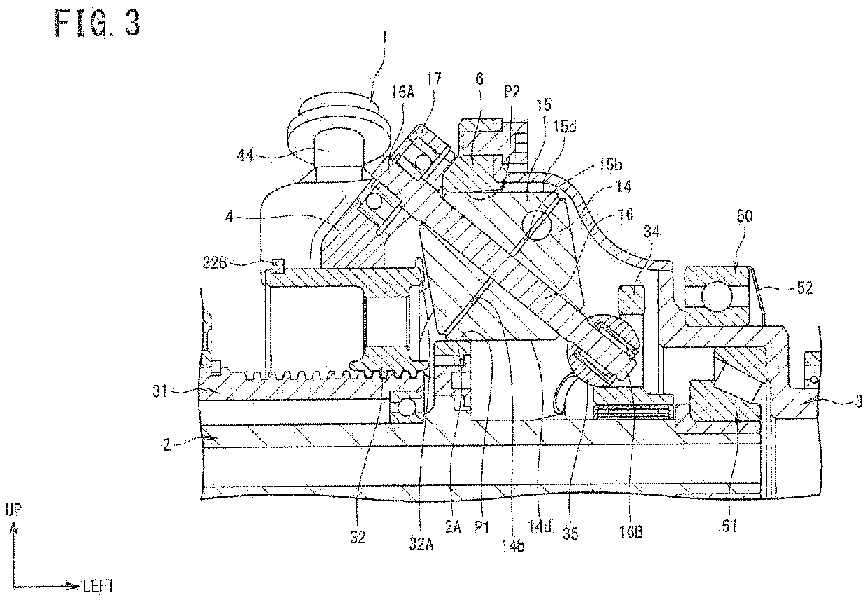

On the other hand, in a case where the planetary cone 5 is moved to a position (far left position in movable range of carrier 4) closest to the shaft portion 3A of the output shaft 3 by the moving mechanism 30, as illustrated in Figure 3, the sun roller 2A comes into contact with the conical surface 14d of the input-side planetary cone 14 on the bottom surface 14b side with the largest diameter.
At this time, the ring roller 6 comes into contact with the conical surface 15d of the output-side planetary cone 15 with the smallest diameter. As a result, the rotation speed of the sun roller 2A is transmitted to the ring roller 6 by being reduced by the planetary cone 5. This is a state of the continuously variable transmission 1 with the largest transmission ratio.

That is, the continuously variable transmission 1 can change the contact position P1 between the conical surface 14d of the input-side planetary cone 14 and the sun roller 2A and the contact position P2 between the conical surface 15d of the output-side planetary cone 15 and the ring roller 6 by the carrier 4, to steplessly change the rotation speed (rotational power) of the input shaft 2 into the rotation speed of the output shaft 3 via the planetary cone 5.

In the course of movement of the planetary cone 5 by the moving mechanism 30, the posture of the planetary cone 5 is temporarily changed to a skewed state. However, the swing of the guide roller 35 in the groove 34A of the shift drum 34, the effect of the self-aligning bearing 17, and the propulsive force of curbing skewing so as to minimize the skew angle move the carrier 4 in the axial direction on the shift flange 32.
For this reason, the planetary cone 5 automatically returns to the position where the skew angle is minimized. Specifically, as illustrated in Figure 4, the position of a line forming the contact surface between the planetary cone 5 and the ring roller is temporarily displaced from a not skewed position L1 to a skewed position L2. Additionally, when the planetary cone 5 is not skewed, a normal force F1 acts in the circumferential direction of the input shaft 2 (see Figure 1), and when the planetary cone 5 is skewed, a normal force F2 including a component of force F3 in the axial direction of the input shaft 2 (see Figure 1) acts thereon. Then, the component of force F3 of the normal force F2 in the skewed state acts so as to cancel the skew of the planetary cone 5, moves the planetary cone 5 and the carrier 4 in the axial direction (leftward in Figure 4) of the input shaft 2, and cancels the skew.

Note that an oil film of a traction oil (not illustrated) is formed in the contact position P1 between the sun roller 2A and the conical surface 14d of the input-side planetary cone 14 and the contact position P2 between the ring roller 6 and the conical surface 15d of the output-side planetary cone 15. As a result, power is transmitted from the sun roller 2A to the input-side planetary cone 14 via the oil film, and power is transmitted from the ring roller 6 to the output-side planetary cone 15 via the oil film.

Additionally, the input-side planetary cone 14 is installed such that its conical surface 14d extends parallel to the axis 2r of the input shaft 2 and is always in contact with the sun roller 2A. Additionally, the output-side planetary cone 15 is installed such that its conical surface 15d extends parallel to the axis 2r of the input shaft 2 and is always in contact with the ring roller 6.

As a result, at the time of transmission, the planetary cone 5 can be moved with the conical surfaces 14d and 15d parallel to the sun roller 2A and the ring roller 6. Hence, it is possible to curb generation of excessive frictional force between the sun roller 2A and the conical surface 14d and between the ring roller 6 and the conical surface 15d, whereby smooth transmission can be performed.

Since the input-side planetary cone 14 and the output-side planetary cone 15 have the same shape with the same outer diameter shape and the same cam groove shape, in a case where the torque input to the input-side planetary cone 14 is small, the ball 20 is located in the deepest position at the center in the circumferential direction of the input-side cam groove 14f of the input-side planetary cone 14 and the output-side cam groove 15f. That is, the input-side planetary cone 14 and the output-side planetary cone 15 are the closest to each other.

In this case, the input-side planetary cone 14 and the output-side planetary cone 15 rotate integrally. In this state, torque is transmitted from the input-side planetary cone 14 to the output-side planetary cone 15 via the ball 20.

This state is a low-load state, and the contact surface pressure between the conical surface 14d of the input-side planetary cone 14 and the sun roller 2A, and the contact surface pressure between the conical surface 15d of the output-side planetary cone 15 and the ring roller 6 are adjusted to an appropriate surface pressure that does not cause slippage. This is largely a result of adopting the elastic member 5A.

On the other hand, in a case where the torque input to the input-side planetary cone 14 is large (i.e., when output-side planetary cone 15 does not rotate smoothly with respect to rotation of input-side planetary cone 14), the output-side planetary cone 15 starts to lag behind the input-side planetary cone 14. That is, the planetary cone 5 becomes twisted as a whole. That is, the output-side planetary cone 15 fails to follow the rotation of the input-side planetary cone 14, and the input-side planetary cone 14 is shifted from the output-side planetary cone 15 in the rotating direction.

While power is transmitted between the input-side planetary cone 14 and the output-side planetary cone 15 via the ball 20, this relative shift causes the ball 20 to move from the deep part (center in circumferential direction) of the input-side cam groove 14f and the output-side cam groove 15f to the shallow part (one side in circumferential direction) thereof, causing the input-side planetary cone 14 and the output-side planetary cone 15 to separate in the axis direction of the support shaft 16.

This is because the input-side cam groove 14f and the output-side cam groove 15f function as cam slope surfaces for the ball 20, and repulsive power and movement corresponding to the torque occur as in the case of a torque cam.

As a result, the input-side planetary cone 14 and the output-side planetary cone 15 move in directions separating from each other on the support shaft 16.

For this reason, the contact surface pressure between the conical surface 14d of the input-side planetary cone 14 and the sun roller 2A and the contact surface pressure between the conical surface 15d of the output-side planetary cone 15 and the ring roller 6 increase according to the torque (input load) transmitted by the planetary cone 5.

Note that instead of the simple tilt angle, the shape of the change in the groove depth in the input-side cam groove 14f and the output-side cam groove 15f may be set such that the tilt increases from the center toward the end portion in the circumferential direction of the input-side cam groove 14f and the output-side cam groove 15f.

The ball 20 is positioned in the center in the circumferential direction of the input-side cam groove 14f and the output-side cam groove 15f. Hence, when the input-side planetary cone 14 is twisted in a direction opposite to the aforementioned rotating direction with respect to the output-side planetary cone 15, the ball 20 can be moved in a direction opposite to the aforementioned direction from the center in the circumferential direction of the input-side cam groove 14f and the output-side cam groove 15f to separate the input-side planetary cone 14 and the output-side planetary cone 15 in the axis direction of the support shaft 16.

Next, effects of the continuously variable transmission 1 of the present example will be described.

In the continuously variable transmission 1 of the present example, the output shaft 3 is disposed coaxially on one end portion side of the input shaft 2. The continuously variable transmission 1 includes: the shift drum 34 disposed on the output shaft 3 side of the sun roller 2A in the axial direction of the input shaft 2; the carrier 4 disposed on the input shaft 2 side of the sun roller 2A in the axial direction of the input shaft 2; the first supporting unit 46 provided in the shift drum 34 and swingably supporting the end portion of the support shaft 16 on the output shaft 3 side; and the second supporting unit 47 provided in the carrier 4 and swingably supporting the end portion of the support shaft 16 on the input shaft 2 side.

The shift drum 34 and the carrier 4 are allowed to move in the axial direction of the input shaft 2, and prevented from rotating around the input shaft 2. The first supporting unit 46 is formed of the spherical guide roller 35 swingably held inside the groove 34A formed in the shift drum 34, and the bearing 54 provided in the guide roller 35. The second supporting unit 47 is formed of the self-aligning bearing 17 held by the carrier 4.

With this configuration, when the shift drum 34 is moved in the axial direction of the input shaft 2 to change the transmission ratio, the swing of the guide roller 35 in the groove 34A of the shift drum 34, and the aligning effect of the self-aligning bearing 17 allow the planetary cone 5 and the carrier 4 to move to an appropriate position in the axial direction of the input shaft 2 while absorbing the temporary skew of the planetary cone 5.

That is, even in a case where the transmission torque is large, when the transmission ratio is changed, movement accompanying the posture change of the planetary cone 5 automatically changes the contact positions of the contact positions P1 and P2, so that the planetary cone 5 can be moved in the axial direction of the input shaft 2 with a small operational force on the moving mechanism 30. As a result, it is possible to change the transmission ratio easily without being affected largely by the transmission torque.

In the continuously variable transmission 1 of the present example, the moving mechanism 30 includes the transmission operation unit 31 connected to the shift drum 34, and the transmission operation unit 31 is operated from outside to move the shift drum 34 in the axial direction of the input shaft 2.

With this configuration, by operating the transmission operation unit 31, the shift drum 34 moves in the axial direction of the input shaft 2 and the axial position of the planetary cone 5 changes. Hence, it is possible to change the transmission ratio steplessly.

In the continuously variable transmission 1 of the present example, the moving mechanism 30 includes the shift flange 32 that is provided on the outer periphery side of the transmission operation unit 31 and on the inner periphery side of the carrier 4 and moves in the axial direction of the input shaft 2 when the transmission operation unit 31 is operated, and the shift drum holding member 33 that connects the shift flange 32 and the shift drum 34 so as to be integrally movable in the axial direction of the input shaft 2. The shift flange 32 is supported by the carrier 4 so as to be movable in the axial direction of the input shaft 2 and prevented from rotating around the input shaft 2.

With this configuration, in a skewed state of the planetary cone 5, the swing of the guide roller 35 in the groove 34A of the shift drum 34, the effect of the self-aligning bearing 17, and the propulsive force of curbing skewing so as to minimize the skew move the carrier 4 on the shift flange 32. Hence, it is possible to stop the planetary cone 5 in a position where the skew is minimized, and cancel the skew. Additionally, since the axial movement of the shift drum 34 changes the axial position of the planetary cone 5, it is possible to change the transmission ratio steplessly.

In the continuously variable transmission 1 of the present example, the guide groove 40 extending in the axial direction of the input shaft 2 is formed in the carrier 4. The guide follower 45 fixed with the bolt 44 inserted into the transmission case 41 from outside in a direction substantially perpendicular to the input shaft 2 abuts on the guide groove 40. The guide follower 45 restricts rotation of the carrier 4 around the input shaft 2, and guides movement of the carrier 4 in the axial direction of the input shaft 2.

With this configuration, it is possible to support the carrier 4 so as not to rotate with respect to the transmission case 41. Additionally, by inserting the bolt 44 in the direction substantially perpendicular to the input shaft 2, it is possible to prevent the bolt 44 from loosening in its axial direction by coming into contact with the guide groove 40.

In the continuously variable transmission 1 of the present example, the planetary cone 5 includes the input-side planetary cone 14 in contact with the sun roller 2A, the output-side planetary cone 15 provided separately from the input-side planetary cone 14 and in contact with the ring roller 6, and the elastic member 5A provided in a compressed state between the bottom surface 14b of the input-side planetary cone 14 and the bottom surface 15b of the output-side planetary cone 15.

With this configuration, it is possible to set the dimensional tolerance so as to provide a gap at the contact position P1 between the conical surface 14d of the input-side planetary cone 14 of the planetary cone 5 and the sun roller 2A, and provide a gap at the contact position P2 between the conical surface 15d of the output-side planetary cone 15 of the planetary cone 5 and the ring roller 6. Then, the elastic member 5A can be assembled to the transmission case 41 in a compressed state. Accordingly, assembly of the planetary cone 5 can be facilitated.

Additionally, since the elastic member 5A is provided between the input-side planetary cone 14 and the output-side planetary cone 15 in a compressed state, the restoring force of the elastic member 5A enables transmission of torque with the conical surface 14d of the input-side planetary cone 14 always in contact with the sun roller 2A and the conical surface 15d of the output-side planetary cone 15 always in contact with the ring roller 6. Furthermore, even in a case where a gap is formed between the conical surface 14d of the input-side planetary cone 14 and the sun roller 2A and between the conical surface 15d of the output-side planetary cone 15 and the ring roller 6 due to production tolerance, centrifugal force at the time of rotation, or the like, it is possible to eliminate the gaps by the restoring force of the elastic member 5A.

In the continuously variable transmission 1 of the present example, the planetary cone 5 includes the ball cam mechanism 21 that connects the bottom surface 14b of the input-side planetary cone 14 and the bottom surface 15b of the output-side planetary cone 15 and transmits power from the input-side planetary cone 14 to the output-side planetary cone 15. The ball cam mechanism 21 includes the input-side cam groove 14f formed in the bottom surface 14b of the input-side planetary cone 14, the output-side cam groove 15f formed in the bottom surface 15b of the output-side planetary cone 15, and the ball 20 accommodated in the input-side cam groove 14f and the output-side cam groove 15f. Then, the input-side cam groove 14f and the output-side cam groove 15f extend in the circumferential direction around the axis center 16r of the support shaft 16, and the input-side cam groove 14f and the output-side cam groove 15f are formed shallower toward the end portion in the circumferential direction.

Regarding the ball cam mechanism 21, when the accelerator is operated by the driver of a vehicle, a difference occurs in the torque acting on each of the input-side planetary cone 14 and the output-side planetary cone 15, and the input-side planetary cone 14 and the output-side planetary cone 15 are shifted in the rotating direction. This causes the ball 20 to move in the gap between the input-side cam groove 14f and the output-side cam groove 15f. As a result, the ball 20 spreads the gap between the input-side planetary cone 14 and the output-side planetary cone 15, so that an appropriate normal force (pressing force) corresponding to the input torque is generated between the input-side planetary cone 14 and the sun roller 2A and between the output-side planetary cone 15 and the ring roller 6, whereby torque can be transmitted appropriately.

In the continuously variable transmission 1 of the present example, the contact position P1 between the conical surface 14d of the planetary cone 5 and the sun roller 2A and the contact position P2 between the conical surface 15d of the planetary cone 5 and the ring roller 6 are in the same position in the axial direction of the input shaft 2.

With this configuration, it is possible to prevent occurrence of a turning moment in the direction of rotating the support shaft 16 inward or outward in the radial direction of the input shaft 2 in the self-aligning bearing 17 and the bearing 54 at both end portions of the support shaft 16, by the normal force acting on the conical surfaces 14d and 15d of the planetary cone 5. For this reason, it is possible to prevent deterioration in durability of the self-aligning bearing 17 and the bearing 54 due to the turning moment acting on the support shaft 16.

Additionally, since the contact position of the planetary cone 5 on the sun roller 2A and the ring roller 6 can be changed without causing a turning moment to act on the support shaft 16, the planetary cone 5 can be moved in the axial direction of the input shaft 2 with a small operational force on the moving mechanism 30. Hence, it is possible to move the planetary cone 5 in the axial direction of the input shaft 2 and change the transmission ratio without reducing the power transmission efficiency with occurrence of an excessive normal force.

As a result, it is possible to prevent deterioration of durability of the self-aligning bearing 17 and the bearing 54 supporting the planetary cone 5, and prevent reduction in power transmission efficiency.

### [Reference Signs List]

1...continuously variable transmission, 2...input shaft 2A...sun roller (input member), 3...output shaft, 5...planetary cone 5A...elastic member, 6...ring roller (output member), 10...drive power source, 14...input-side planetary cone, 14b...bottom surface, 14d...conical surface, 14f...input-side cam groove, 15...output-side planetary cone, 15b...bottom surface, 15d...conical surface, 15f...output-side cam groove, 16...support shaft, 16r...axis center, 17...self-aligning bearing, 20...ball, 21...ball cam mechanism, 30... moving mechanism, 31...transmission operation unit, 32...shift flange, 33...shift drum holding member, 34...shift drum, 34A...groove, 35...guide roller, 40...guide groove, 41...transmission case, 44...bolt, 45...guide follower, 46...first supporting unit, 47...second supporting unit, 54...bearing, P1, P2...contact position

## Claims

1. A continuously variable transmission (1) comprising:
an input member (2A) provided on an input shaft (2) to which rotational power is input from a drive power source (10);
an output member (6) that transmits the rotational power input from the input member (2A) to an output shaft (3);
a planetary cone (5) having a conical surface (14d, 15d) with which the input member (2A) and the output member (6) come into contact, the planetary cone (5) being formed in a truncated cone shape;
a support shaft (16) that supports the planetary cone (5) to be rotatable and movable in an axis direction; and
a moving mechanism (30) that changes a contact position (P1) of the input member (2A) on the conical surface (14d) of the planetary cone (5) and a contact position (P2) of the output member (6) on the conical surface (15d) of the planetary cone (5) to steplessly change the rotational power of the input shaft (2) into rotational power of the output shaft (3) via the planetary cone (5), wherein:
the output shaft (3) is disposed coaxially on one end portion side of the input shaft (2);
the continuously variable transmission (1) comprises
a shift drum (34) disposed on the output shaft (3) side of the input member (2A) in an axial direction of the input shaft (2),
a carrier (4) disposed on the input shaft (2) side of the input member (2A) in the axial direction of the input shaft (2), wherein:
this shift drum (34) and the carrier (4) are allowed to move in the axial direction of the input shaft (2) and prevented from rotating around the input shaft (2), **characterized in that** the continuously variable transmission (1) further comprises
a first supporting unit (46) provided in the shift drum (34) and swingably supporting an end portion of the support shaft (16) on the output shaft (3) side, and
a second supporting unit (47) provided in the carrier (4) and swingably supporting an end portion of the support shaft (16) on the input shaft (2) side;
the first supporting unit (46) includes a spherical guide roller (35) swingably held inside a groove (34A) formed in the shift drum (34), and a bearing (54) provided in the guide roller (35); and
the second supporting unit (47) includes a self-aligning bearing (17) held by the carrier (4).

2. The continuously variable transmission (1) as claimed in claim 1, wherein:
the moving mechanism (30) includes a transmission operation unit (31) connected to the shift drum (34); and
the transmission operation unit (31) is operated from outside to move the shift drum (34) in the axial direction of the input shaft (2).

3. The continuously variable transmission (1) as claimed in claim 2, wherein:
the moving mechanism (30) includes
a shift flange (32) that is provided on an outer periphery side of the transmission operation unit (31) and on an inner periphery side of the carrier (4) and moves in the axial direction of the input shaft (2) when the transmission operation unit (31) is operated, and
a shift drum holding member (33) that connects the shift flange (32) and the shift drum (34) so as to be integrally movable in the axial direction of the input shaft (2); and
the shift flange (32) is supported by the carrier (4) so as to be movable in the axial direction of the input shaft (2) and prevented from rotating around the input shaft (2).

4. The continuously variable transmission (1) as claimed in any one of claims 1 to 3, wherein:
a guide groove (40) extending in the axial direction of the input shaft (2) is formed in the carrier (4);
a guide follower (45) fixed to a transmission case (41) with a bolt (44) inserted into the transmission case (41) in a direction substantially perpendicular to the input shaft (2) abuts on the guide groove (40); and
the guide follower (45) restricts rotation of the carrier (4) around the input shaft (2), and guides movement of the carrier (4) in the axial direction of the input shaft (2).

5. The continuously variable transmission (1) as claimed in any one of claims 1 to 4, wherein
the planetary cone (5) includes
an input-side planetary cone (14) in contact with the input member (2A),
an output-side planetary cone (15) provided separately from the input-side planetary cone (14) and in contact with the output member (6), and
an elastic member (5A) provided in a compressed state between a bottom surface (14b) of the input-side planetary cone (14) and a bottom surface (15b) of the output-side planetary cone (15).

6. The continuously variable transmission (1) as claimed in claim 5, wherein:
the planetary cone (5) includes a ball cam mechanism (21) that connects the bottom surface (14b) of the input-side planetary cone (14) and the bottom surface (15b) of the output-side planetary cone (15) and transmits power from the input-side planetary cone (14) to the output-side planetary cone (15);
the ball cam mechanism (21) includes
an input-side cam groove (14f) formed in the bottom surface (14b) of the input-side planetary cone (14),
an output-side cam groove (15f) formed in the bottom surface (15b) of the output-side planetary cone (15), and
a ball (20) accommodated in the input-side cam groove (14f) and the output-side cam groove (15f);
the input-side cam groove (14f) and the output-side cam groove (15f) extend in a circumferential direction around an axis center (16r) of the support shaft (16); and
the input-side cam groove (14f) and the output-side cam groove (15f) are formed shallower toward an end portion in the circumferential direction.

7. The continuously variable transmission (1) as claimed in any one of claims 1 to 6, wherein
the contact position (P1) between the conical surface (14d) of the planetary cone (5) and the input member (2A) and the contact position (P2) between the conical surface (15d) of the planetary cone (5) and the output member (6) are in the same position in the axial direction of the input shaft (2).

## Patentansprüche

1. Stufenlos verstellbares Getriebe (1) umfassend:
ein Eingabeelement (2A), das auf einer Eingabewelle (2) bereitgestellt ist, in die Drehkraft von einer Antriebskraftquelle eingegeben wird (10);
ein Ausgabeelement (6), das die Drehleistungseingabe von dem Eingabeelement (2A) auf eine Ausgabewelle (3) überträgt;
einen Planetenkegel (5) mit einer konischen Oberfläche (14d, 15d), mit der das Eingabeelement (2A) und das Ausgabeelement (6) in Kontakt kommen, wobei der Planetenkegel (5) kegelstumpfförmig ausgebildet ist;
eine Stützwelle (16), die den Planetenkegel (5) drehbar und in einer Achsenrichtung beweglich trägt; und
einen beweglichen Mechanismus (30), der eine Kontaktstellung (P1) des Eingabeelements (2A) auf der konischen Oberfläche (14d) des Planetenkegels (5) und eine Kontaktstellung (P2) des Ausgabeelements (6) auf der konischen Oberfläche (15d) des Planetenkegels (5) ändert, um die Drehkraft der Eingabewelle (2) über den Planetenkegel (5) stufenlos in Drehkraft der Ausgabewelle (3) umzuwandeln, wobei:
die Ausgabewelle (3) koaxial auf einer Endabschnittsseite der Eingabewelle (2) angeordnet ist;
das stufenlos verstellbare Getriebe (1) Folgendes umfasst eine Schaltwalze (34), die auf der Ausgabewellenseite (3) des Eingabeelements (2A) in axialer Richtung der Eingabewelle (2) angeordnet ist,
einen Träger (4), der in axialer Richtung der Eingabewelle (2) auf der Eingabewellenseite (2) des Eingabeelements (2A) angeordnet ist, wobei:
diese Schaltwalze (34) und der Träger (4) sich in die axiale Richtung der Eingabewelle (2) bewegen können und daran gehindert werden, dass sie sich um die Eingabewelle (2) drehen, **dadurch gekennzeichnet, dass** das stufenlos verstellbare Getriebe (1) ferner Folgendes umfasst
eine erste Stützeinheit (46), die in der Schaltwalze (34) bereitgestellt ist und schwenkbar einen Endabschnitt der Stützwelle (16) auf der Ausgabewelle (3) trägt, und
eine zweite Stützeinheit (47), die in dem Träger (4) bereitgestellt ist und einen Endabschnitt der Stützwelle (16) auf der Eingabewellenseite (2) schwenkbar stützt;
die erste Stützeinheit (46) eine kugelförmige Führungsrolle (35) umfasst, die schwenkbar in einer in der Schaltwalze (34) ausgebildeten Nut (34A) gehalten wird, und ein Lager (54), das in der Führungsrolle (35) bereitgestellt ist; und
die zweite Stützeinheit (47) ein Pendellager (17) umfasst, das von dem Träger (4) gehalten wird.

2. Stufenlos verstellbares Getriebe (1) nach Anspruch 1**,** wobei:
der Bewegungsmechanismus (30) eine Getriebebetriebseinheit (31) umfasst, die mit der Schaltwalze (34) verbunden ist; und
die Getriebebetriebseinheit (31) von außen betrieben wird, um die Schaltwalze (34) in die axiale Richtung der Eingabewelle (2) zu bewegen.

3. Stufenlos verstellbares Getriebe (1) nach Anspruch 2**,** wobei:
der Bewegungsmechanismus (30) Folgendes umfasst einen Schaltflansch (32), der an einer äußeren Umfangsseite der Getriebebetriebseinheit (31) und an einer inneren Umfangsseite des Trägers (4) bereitgestellt ist und sich in die axialer Richtung der Eingabewelle (2) bewegt, wenn die Getriebebetriebseinheit (31) betrieben wird, und
ein Schaltwalzenhalteelement (33), das den Schaltflansch (32) und die Schaltwalze (34) verbindet, um in der axialen Richtung der Eingabewelle (2) integral beweglich zu sein; und
der Schaltflansch (32) von dem Träger (4) getragen wird, um in der axialen Richtung der Eingabewelle (2) beweglich zu sein und daran gehindert wird, sich um die Eingabewelle (2) zu drehen.

4. Stufenlos verstellbares Getriebe (1) nach einem der Ansprüche 1 bis 3, wobei:
eine sich in der axialen Richtung der Eingabewelle (2) erstreckende Führungsnut (40) in dem Träger (4) ausgebildet ist;
an der Führungsnut (40) ein an einem Getriebegehäuse (41) befestigter Führungsfolger (45) mit einem in das Getriebegehäuse (41) in einer Richtung im Wesentlichen senkrecht zur Eingabewelle (2) eingesetzten Bolzen (44) anliegt; und
die Führungsrolle (45) Drehung des Trägers (4) um die Eingabewelle (2) begrenzt und Bewegung des Trägers (4) in die axiale Richtung der Eingabewelle (2) führt.

5. Stufenlos verstellbares Getriebe (1) nach einem der Ansprüche 1 bis 4, wobei
der Planetenkegel (5) Folgendes umfasst
einen eingabeseitigen Planetenkegel (14), der mit dem Eingabeelement (2A) in Kontakt steht,
einen ausgabeseitigen Planetenkegel (15), der getrennt von dem eingabeseitigen Planetenkegel (14) bereitgestellt ist und mit dem Ausgabeelement (6) in Kontakt steht, und
ein elastisches Element (5A), das in einem komprimierten Zustand zwischen einer Bodenoberfläche (14b) des eingabeseitigen Planetenkegels (14) und einer Bodenoberfläche (15b) des ausgabeseitigen Planetenkegels (15) bereitgestellt ist.

6. Stufenlos verstellbares Getriebe (1) nach Anspruch 5, wobei:
der Planetenkegel (5) einen Kugelnockenmechanismus (21) umfasst, der die Bodenoberfläche (14b) des eingabeseitigen Planetenkegels (14) und die Bodenoberfläche (15b) des ausgabeseitigen Planetenkegels (15) verbindet und Kraft von dem eingabeseitigen Planetenkegel (14) auf den ausgabeseitigen Planetenkegel (15) überträgt;
der Kugelnockenmechanismus (21) Folgendes umfasst eine eingabeseitige Nockennut (14f), die in der Bodenoberfläche (14b) des eingabeseitigen Planetenkegels (14) ausgebildet ist, eine ausgabeseitige Nockennut (15f), die in der Bodenoberfläche (15b) des ausgabeseitigen Planetenkegels (15) ausgebildet ist, und
eine Kugel (20), die in der eingabeseitigen Nockennut (14f) und der ausgabeseitigen Nockennut (15f) aufgenommen ist;
die eingabeseitige Nockennut (14f) und die ausgabeseitige Nockennut (15f) sich in einer Umfangsrichtung um eine Achsmitte (16r) der Stützwelle (16) erstrecken; und
die eingabeseitige Nockennut (14f) und die ausgabeseitige Nockennut (15f) in der Umfangsrichtung auf einen Endabschnitt hinzu flacher ausgebildet sind.

7. Stufenlos verstellbares Getriebe (1) nach einem der Ansprüche 1 bis 6, wobei
die Kontaktstellung (P1) zwischen der konischen Oberfläche (14d) des Planetenkegels (5) und dem Eingabeelement (2A) und die Kontaktstellung (P2) zwischen der konischen Oberfläche (15d) des Planetenkegels (5) und dem Ausgabeelement (6) sich in der axialen Richtung der Eingabewelle (2) in der gleichen Stellung befinden.

## Revendications

1. Transmission à variation continue (1) comprenant :
un élément d'entrée (2A) prévu sur un arbre d'entrée (2) auquel est appliquée une puissance de rotation provenant d'une source de puissance d'entraînement (10) ;
un élément de sortie (6) qui transmet l'entrée de puissance de rotation de l'élément d'entrée (2A) à un arbre de sortie (3) ;
un cône planétaire (5) ayant une surface conique (14d, 15d) avec laquelle l'élément d'entrée (2A) et l'élément de sortie (6) entrent en contact, le cône planétaire (5) étant formé sous une forme de cône tronqué ;
un arbre de support (16) qui supporte le cône planétaire (5) afin qu'il soit rotatif et mobile dans une direction d'axe ; et
un mécanisme de déplacement (30) qui modifie une position de contact (P1) de l'élément d'entrée (2A) sur la surface conique (14d) du cône planétaire (5) et une position de contact (P2) de l'élément de sortie (6) sur la surface conique (15d) du cône planétaire (5) pour modifier en continu la puissance de rotation de l'arbre d'entrée (2) en puissance de rotation de l'arbre de sortie (3) via le cône planétaire (5), dans laquelle :
l'arbre de sortie (3) est disposé coaxialement sur un côté de partie d'extrémité de l'arbre d'entrée (2) ;
la transmission à variation continue (1) comprend un tambour de changement de vitesse (34) disposé sur le côté arbre de sortie (3) de l'élément d'entrée (2A) dans une direction axiale de l'arbre d'entrée (2),
un support (4) disposé sur le côté arbre d'entrée (2) de l'élément d'entrée (2A) dans la direction axiale de l'arbre d'entrée (2), dans laquelle :
ce tambour de changement de vitesse (34) et le support (4) sont autorisés à se déplacer dans la direction axiale de l'arbre d'entrée (2) et empêchés de tourner autour de l'arbre d'entrée (2), **caractérisé en ce que** la transmission à variation continue (1) comprend également
une première unité de support (46) prévue dans le tambour de changement de vitesse (34) et supportant de manière pivotante une partie d'extrémité de l'arbre de support (16) du côté arbre de sortie (3), et
une seconde unité de support (47) prévue dans le support (4) et supportant de manière pivotante une partie d'extrémité de l'arbre de support (16) du côté arbre d'entrée (2) ;
la première unité de support (46) comporte un rouleau de guidage sphérique (35) maintenu de manière pivotante à l'intérieur d'une rainure (34A) formée dans le tambour de changement de vitesse (34), et un roulement (54) prévu dans le rouleau de guidage (35) ; et
la seconde unité de support (47) comporte un palier auto-alignant (17) maintenu par le support (4).

2. Transmission à variation continue (1) selon la revendication 1, dans laquelle :
le mécanisme de déplacement (30) comporte une unité d'opération de transmission (31) reliée au tambour de changement de vitesse (34) ; et
l'unité d'opération de transmission (31) est actionnée de l'extérieur pour déplacer le tambour de changement de vitesse (34) dans la direction axiale de l'arbre d'entrée (2).

3. Transmission à variation continue (1) selon la revendication 2, dans laquelle :
le mécanisme de déplacement (30) comporte
une bride de changement de vitesse (32) qui est prévue sur un côté de la périphérie extérieure de l'unité d'opération de transmission (31) et sur un côté de la périphérie intérieure du support (4) et qui se déplace dans la direction axiale de l'arbre d'entrée (2) lorsque l'unité d'opération de transmission (31) est actionnée, et
un élément de maintien de tambour de changement de vitesse (33) qui relie la bride de changement de vitesse (32) et le tambour de changement de vitesse (34) de manière à être mobile solidairement dans la direction axiale de l'arbre d'entrée (2) ; et
la bride de changement de vitesse (32) est supportée par le support (4) de manière à pouvoir être déplacée dans la direction axiale de l'arbre d'entrée (2) et empêchée de tourner autour de l'arbre d'entrée (2).

4. Transmission à variation continue (1) selon l'une quelconque des revendications 1 à 3**,** dans laquelle :
une rainure de guidage (40) se prolongeant dans la direction axiale de l'arbre d'entrée (2) est formée dans le support (4) ;
un suiveur de guidage (45) fixé à un carter de transmission (41) avec un boulon (44) inséré dans le carter de transmission (41) dans une direction sensiblement perpendiculaire à l'arbre d'entrée (2) vient en butée contre la rainure de guidage (40) ; et
le suiveur de guidage (45) limite la rotation du support (4) autour de l'arbre d'entrée (2) et guide le mouvement du support (4) dans la direction axiale de l'arbre d'entrée (2).

5. Transmission à variation continue (1) selon l'une quelconque des revendications 1 à 4**,** dans laquelle
le cône planétaire (5) comporte
un cône planétaire côté entrée (14) en contact avec l'élément **d'entrée** (2A),
un cône planétaire côté sortie (15) prévu séparément du cône planétaire côté entrée (14) et en contact avec l'élément de sortie (6), et
un élément élastique (5A) disposé dans un état comprimé entre une surface inférieure (14b) du cône planétaire côté entrée (14) et une surface inférieure (15b) du cône planétaire côté sortie (15).

6. Transmission à variation continue (1) selon la revendication 5**,** dans laquelle :
le cône planétaire (5) comporte un mécanisme à came à billes (21) qui relie la surface inférieure (14b) du cône planétaire côté entrée (14) et la surface inférieure (15b) du cône planétaire côté sortie (15) et transmet la puissance du cône planétaire côté entrée (14) au cône planétaire côté sortie (15) ;
le mécanisme à came à billes (21) comporte une rainure de came côté entrée (14f) formée dans la surface inférieure (14b) du cône planétaire côté entrée (14),
une rainure de came côté sortie (15f) formée dans la surface inférieure (15b) du cône planétaire côté sortie (15), et
une bille (20) logée dans la rainure de came côté entrée (14f) et la rainure de came côté sortie (15f) ;
la rainure de came côté entrée (14f) et la rainure de came côté sortie (15f) se prolongent dans une direction circonférentielle autour d'un centre d'axe (16r) de l'arbre de support (16) ; et
la rainure de came côté entrée (14f) et la rainure de came côté sortie (15f) sont formées à une profondeur moindre vers une partie d'extrémité dans la direction circonférentielle.

7. Transmission à variation continue (1) selon l'une quelconque des revendications 1 à 6**,** dans laquelle
la position de contact (P1) entre la surface conique (14d) du cône planétaire (5) et l'élément d'entrée (2A) et la position de contact (P2) entre la surface conique (15d) du cône planétaire (5) et l'élément de sortie (6) sont dans la même position dans la direction axiale de l'arbre d'entrée (2).
